# EUROPÄISCHE PATENTSCHRIFT

(11) **EP 4 096 851 B1**
(45) Veröffentlichungstag und Bekanntmachung des Hinweises auf die Patenterteilung: **14.05.2025**
(21) Anmeldenummer: 21703622.7
(22) Anmeldetag: 27.01.2021
(51) Int. Cl.: B21H 8/00, B21D 28/26, B21D 31/04, B60J 10/18, B21D 28/12

(54) **METALLBAND ALS EINLAGE FÜR KANTENSCHUTZSTREIFEN UND VERFAHREN ZU SEINER HERSTELLUNG**
METAL BAND AS INLAY FOR EDGE-PROTECTION STRIPS AND METHOD FOR PRODUCTION OF SAID METAL BAND
RUBAN MÉTALLIQUE UTILISÉ COMME ARMATURE POUR BANDE DE PROTECTION DE BORD ET PROCÉDÉ DE FABRICATION DE CE RUBAN MÉTALLIQUE

(30) Priorität: 28.01.2020 DE 102020101975
(43) Veröffentlichungstag der Anmeldung: 07.12.2022
(73) Patentinhaber: BFC Fahrzeugteile GmbH, 74321 Bietigheim-Bissingen (DE)
(72) Erfinder: YILDIRIM, Ali, 71334 Waiblingen (DE)
(74) Vertreter: Manitz Finsterwald Patent- und Rechtsanwaltspartnerschaft mbB
(86) Internationale Anmeldenummer: PCT/EP2021/051889
(87) Internationale Veröffentlichungsnummer: WO 2021/151962

(56) Entgegenhaltungen:
- WO-A1-2014/175566
- DE-A1- 102018 004 379
- DE-A1- 3 020 447
- JP-A- 2011 143 918
- US-A1- 2004 150 171

## Beschreibung

Die vorliegende Erfindung betrifft ein Metallband als Einlage für Zier-, Dicht- oder Kantenschutzstreifen, insbesondere für Kraftfahrzeuge.

Ein Metallband mit den Merkmalen des Oberbegriffs des Anspruchs 1 ist aus der JP 2011 143918 A bekannt. Außerdem sind Metallbänder als Einlage für Kantenschutzstreifen auch aus der DE 10 2018 004379 A1, US 2004/150171 A1 und der DE 30 20 447 A1 bekannt.

Derartige Metallbänder werden insbesondere im Kraftfahrzeugbereich als Einlage für Dichtstreifen zum Abdichten von Motorraum-, Kofferraum- sowie für Tür- und Fensteröffnungen eingesetzt. Die kontinuierlich gefertigten Metallbänder sind mit einem Dichtmaterial, wie z.B. Gummi und/oder flexiblem Kunststoff, ummantelt und weisen oftmals Schlitze auf, unter anderem, um bei nicht haftmittelbeschichteten Metallbändern ein Durchdringen des Dichtmaterials zu ermöglichen, da eine Haftung zwischen Gummi und Metall bzw. zwischen Kunststoff und Metall nicht möglich bzw. unzureichend ist. Andererseits sind haftmittelbeschichtete Metallbänder sehr teuer. Außer Schlitzen, die insbesondere durch rotatives Schneiden hergestellt werden können, können derartige Metallbänder auch gestanzte Durchbrüche aufweisen. Geschnittene Schlitze können durch Walzstrecken aufgeweitet werden. Es können aber auch Metallbänder ohne Durchbrechungen verwendet werden, insbesondere wenn die fertigen Dichtstreifen im eingebauten Zustand große Krümmungsradien haben. Diese benötigen grundsätzlich eine Haftmittelbeschichtung.

Metallbänder der genannten Art werden vor oder nach dem Ummanteln mit dem Dichtmaterial zu einem meist U-förmigem Klemmprofil gebogen, welches auf die Dichtflansche der Öffnung geklemmt wird. Um dabei den Konturen der Öffnung folgen zu können, sollte das Klemmprofil in beiden senkrechten Richtungen zu seiner Längsrichtung flexibel sein. Zudem sollte das Klemmprofil in seiner Längsrichtung stauchbar sein, wenn die abzudichtenden Öffnungen Umfangstoleranzen aufweisen, da ein Ablängen des Dichtstreifens vor Ort sehr aufwendig wäre.

Andererseits muss das Klemmprofil auch eine gewisse Zugfestigkeit und Steifigkeit aufweisen, da die Zier-, Dicht- oder Kantenschutzstreifen üblicherweise durch Extrudieren hergestellt werden, wobei erhebliche Kräfte in Längsrichtung des Bandes auftreten. Ein weiteres Erfordernis des Klemmprofils besteht darin, eine größtmögliche Klemmkraft auf die Dichtflansche auszuüben.

Bekannte Klemmprofile sind aus folgenden Gründen mit Durchbrüchen bzw. Verzahnungen versehen: zum einen sind diese Verzahnungen bzw. Durchbrüche bei nicht beschichteten Metallbändern notwendig, um eine Verbindung des Gummis oder Kunststoffes durch das Metallband hindurch zu erhalten, weil Gummi und Kunststoff nicht bzw. schlecht an blanken Metallen haften und das Metallband daher locker im Dichtprofil läge. Der Gummi bzw. Kunststoff penetriert also die Durchbrüche bzw. Zähne und verankert damit das Metallband im Dichtprofil. Zum anderen sind Zähne bzw. Durchbrüche im Metallband erforderlich, um das Dichtprofil um Radien der jeweiligen Öffnung, Kofferraum, Motorhaube oder Türe, herumbiegen zu können.

Die Zahnzwischenräume, die eine Öffnungsweite von 0,5 bis 1,5 mm und mehr haben können, ergeben jedoch einen unerwünschten "Hungry Horse"-Effekt am fertigen Profil, d.h. eine sehr unschöne, raue bzw. wellige Oberfläche, die man mit verschiedenen Maßnahmen zu kaschieren versucht, beispielsweise durch Beflocken, Bezug mit Textilien, Abdeckung mit zusätzlichen Lippen, Zierleisten oder Aufbringen von diversen Rändelungen. Diese Maßnahmen sind zeit- und kostenintensiv sowie meistens gewichtserhöhend und nicht immer möglich, wie beispielsweise bei außenliegenden Türschachtdichtungen oder äußeren Dachleisten an Kraftfahrzeugen. Daher ist man gezwungen, auf oberflächenbeschichtete Metallbänder auszuweichen, an deren Oberfläche Gummi bzw. Kunststoffe haften, und die man mit sehr kleinen Zahnzwischenräumen von knapp über 0,0 mm bis <0,4 mm versehen kann, um einen "Hungry Horse"-Effekt zu vermeiden und sehr schöne, glatte Oberflächen am fertigen Profil zu erhalten. Solche beschichteten Bänder sind aber sehr teuer und haben relativ lange Lieferzeiten. Darüber hinaus gibt es nur wenige Hersteller für die genannten Beschichtungsmaterialien.

Es gibt zwar auch metallische Klemmprofile, die aus optischen Gründen keine Kaschierung benötigen. Jedoch sind auch hier beschichtete Metallbänder erforderlich, insbesondere wenn diese Bänder einen breiten Mittelsteg oder mehrere breite Stege aufweisen, weil sonst das Klemmprofil im Bereich des Steges locker im Gummi bzw. Kunststoff eingebettet liegt und beim Biegen des Profils um Radien von Öffnungen oder dergleichen Deformierungen am fertigen Profil auftreten.

Der Erfindung liegt die Aufgabe zugrunde, die genannten Nachteile zu vermeiden. Insbesondere soll ein Metallband angegeben werden, welches ohne Beschichtung auskommt und dennoch eine gute Haftung zwischen Kunststoff bzw. Gummi einerseits und Metallband andererseits ermöglicht.

Diese Aufgabe wird durch ein Metallband mit den Merkmalen des Anspruchs 1 bzw. durch ein Zier-, Dicht- oder Kantenschutzstreifen mit den Merkmalen des Anspruchs 12 gelöst. Insbesondere wird die Aufgabe dadurch gelöst, dass die Oberfläche auf mindestens einer Flachseite des Bandes profiliert ausgebildet ist.

Durch die Profilierung mindestens einer Flachseite des Metallbandes erhöht sich die Oberfläche des Bandes. Dadurch kann eine Haftung zwischen Kunststoff bzw. Gummi und Metallband verbessert werden. Zudem führt die profilierte Struktur der jeweiligen Oberfläche auch zu einer besseren Haftverbindung zwischen Kunststoff bzw. Gummi einerseits und Metallband andererseits.

Das erfindungsgemäße Metallband hat gegenüber bekannten Bändern, insbesondere beschichteten Bändern, deutlich geringere Kosten. Zudem sind erfindungsgemäße Bänder einfacher in der Herstellung, so dass sie unproblematisch lieferbar sind. Schließlich kann sich durch die Profilierung auch eine partielle Materialverfestigung und damit Erhöhung der Festigkeit des Bandes ergeben.

Vorzugsweise weist das Band eine Vielzahl von in Längsrichtung des Bandes aufeinanderfolgende, insbesondere schlitzartige, Durchbrechungen auf. Die Durchbrechungen des Bandes ermöglichen eine bessere Biegsamkeit des Metallbandes, wodurch sich das Metallband bzw. der daraus gefertigte Zier-, Dicht- oder Kantenschutzstreifen besser an den Rand der Öffnung anpassen lässt.

Zur Erhöhung der Haftwirkung des Gummimaterials oder des Kunststoffmaterials an dem Metallband ist die Profilierung der Oberfläche erfindungsgemäß auf mindestens einer Flachseite des Bandes durch ein oberflächenvergrößerndes Rastermuster aus einer Vielzahl von Einprägungen gebildet. Durch die vergrößerte Oberfläche weist das Metallband mehr Anlagerungsfläche für das Dichtmaterial auf, wodurch es sich fester mit dem Metallband verbinden kann.

Oberflächenvergrößernd bedeutet, dass die mittels einer Vielzahl von Einprägungen profilierte Oberfläche des Metallbandes eine größere Oberfläche aufweist als die unprofilierte Oberfläche des Metallbandes. Die Oberflächenvergrößerung wird dadurch erreicht, dass das Blechmaterial durch Kaltverformung gestreckt wird, um die Einprägungen zu erzeugen, wodurch sich letztlich die Oberfläche des geprägten Metallbandes im Vergleich zum ungeprägten Metallband erhöht.

Um eine oder beide Flachseiten eines erfindungsgemäßen Metallbandes mit einer Profilierung zu versehen, kann das Metallband bevorzugt mit einer Vielzahl von Einprägungen versehen werden.

Die Oberfläche der jeweiligen Flachseite des Metallbandes kann bereichsweise oder vollständig mit einer Profilierung versehen sein. Insbesondere kann die Oberfläche in einem oder mehreren Längsstreifen mit einer Profilierung versehen sein. Beispielsweise kann die Profilierung in den Bereichen mit Durchbrechungen vorgesehen sein oder in Bereichen ohne Durchbrechungen. Das Vorsehen einer Profilierung in Bereichen ohne Durchbrechung hat den Vorteil, dass dort, wo kein Kunststoff- bzw. Gummimaterial das Metallband durchdringen kann, dennoch eine gute Haftung zwischen dem Kunststoff bzw. Gummi einerseits und dem Metallband andererseits erreicht werden kann.

Die Profilierung der Oberfläche auf der jeweiligen Flachseite des Metallbandes kann bevorzugt ein sich in Längs- und/oder Querrichtung des Bandes wiederholendes Muster aufweisen. Zum einen wird hierdurch eine gleichmäßig gute Haftung über das Band erreicht, und zum anderen ist ein solches Muster einfach in der Herstellung.

Die Haftung zwischen dem Metallband und dem Dichtmaterial wird vorzugsweise durch eine Vielzahl dicht nebeneinander angeordneter einzelner Einprägungen erreicht. Dabei kann die Profilierung eine Dichte von bis zu 700, vorzugsweise bis zu 800 und besonders bevorzugt von bis zu 850 Einprägungen auf einer Fläche von einem Quadratzentimeter aufweisen. Mit anderen Worten weist die Oberfläche des Metallbandes eine Profilierung mit bis zu 700 Prägungen pro Quadratzentimeter, vorzugsweise mit bis zu 800 Prägungen pro Quadratzentimeter und besonders bevorzugt mit bis zu 850 Prägungen pro Quadratzentimeter auf.

Die Prägetiefe der Einprägungen kann stufenlos von 0,01 mm bis 0,7 mm einstellbar sein, so dass die Einprägungen eine Prägetiefe von 0,01 mm bis 0,7 mm aufweisen können. Die Prägetiefe lässt sich beispielsweise durch einen Anpressdruck eines zur Prägung verwendeten Werkzeugs, wie z.B. eines Prägestempels oder einer Prägewalze, stufenlos einstellen. Dabei gilt, dass die Prägetiefe umso größer ist, je höher der Anpressdruck ist. Die resultierende Oberflächenerhöhung durch die Einprägungen ist umso größer, je größer die Prägetiefe ist, insbesondere da durch eine größere Prägetiefe das Material des Metallbandes stärker gestreckt wird.

Gemäß einer möglichen Ausgestaltung kann mindestens eine Einprägung eine Längserstreckung aufweisen, wobei die Längserstreckung der Einprägungen unter einem Winkel von 0° bis 90° zur Längsrichtung des Bandes ausgerichtet ist. Durch die Ausrichtung von sich längserstreckenden Einprägungen lässt sich eine erhöhte Haftung des Dichtmaterials an dem Metallband in einer Vorzugsrichtung erreichen.

Alternativ oder zusätzlich kann mindestens eine Einprägung quasi punktförmig ausgestaltet sein. Durch eine quasi punktförmige Ausgestaltung der Einprägungen lassen sich möglichst viele Einprägungen pro Flächeneinheit erzeugen.

Nach besonderen Ausgestaltungen der Erfindung weisen die Einprägungen die Form einer drei- oder vierseitigen Pyramide oder eines solchen Pyramidenstumpfs, die Form eines Kegels oder Kegelstumpfs, die Form einer Kuppel, eines Zylinders, eines Walmdachs oder einer Linse auf. Auch Kombinationen dieser Formen sind möglich. Zudem sind auch Freiformen für die Einprägungen möglich. Hierdurch kann die Verankerung des Gummis bzw. Kunststoffs am Metallband in vorteilhafter Weise verbessert werden, so dass auf eine Beschichtung des Metallbandes verzichtet werden kann.

Gemäß einer möglichst einfach und somit kostengünstig zu realisierenden Ausgestaltung können mehrere Einprägungen in aufeinanderfolgenden Reihen und Spalten angeordnet sein. Dabei können sich die Reihen von Einprägung in Längsrichtung, d.h. parallel zur Längsrichtung des Bandes und die Spalten in Querrichtung, d.h. parallel zur Querrichtung des Bandes erstrecken. Hierdurch lässt sich die Oberfläche des Metallbandes durch eine quer, insbesondere rechtwinklig, zur Längsrichtung des Bandes ausgerichtete Prägewalze in einem Rollprägeverfahren herstellen. Es ist aber auch möglich, dass die Reihen von Einprägungen schräg, d.h. unter einem von 0° abweichenden Winkel, wie z.B. 45°, bezüglich der Längsrichtung des Bandes ausgerichtet sein können. In entsprechender Weise können die Spalten von Einprägungen schräg, d.h. unter einem von 0° abweichenden Winkel, wie z.B. 45°, bezüglich der Querrichtung des Bandes ausgerichtet sein.

Damit die Oberfläche möglichst effizient, d.h. möglichst dicht, mit Einprägungen profiliert ist, können die Einprägungen von in Längsrichtung des Bandes aufeinanderfolgenden Spalten von Einprägungen in Querrichtung zueinander versetzt sein. Eine möglichst dichte Anordnung der Einprägungen lässt sich vorzugsweise erreichen, indem die Einprägungen von in Längsrichtung des Bandes aufeinanderfolgenden Spalten von Einprägungen um die halbe Längserstreckung einer Einprägung zueinander versetzt sind.

Vorzugsweise ist der Abstand zwischen den Mittelpunkten einer Einprägung und einer unmittelbar benachbarten Einprägung in Querrichtung des Bandes gesehen geringer als 1,0 mm, vorzugsweise geringer als 0,7 mm und besonders bevorzugt geringer als 0,4 mm. Zusätzlich oder alternativ kann der Abstand zwischen den Mittelpunkten einer Einprägung und einer unmittelbar benachbarten Einprägung in Längsrichtung des Bandes gesehen geringer als 0,7 mm, vorzugsweise geringer als 0,5 mm und besonders bevorzugt geringer als 0,3 mm sein. Durch derart geringe Abstände zwischen benachbarten Einprägungen, lassen sich möglichst viele oberflächenerhöhende Einprägungen pro Flächeneinheit realisieren.

Eine besonders hohe Haftung des Dichtmaterials lässt sich dadurch erzielen, dass beide Flachseiten des Bandes Einprägungen aufweisen. Alternativ kann aber auch nur eine Flachseite des Bandes Einprägungen aufweisen, wodurch sich das Metallband besonders einfach und kostengünstig herstellen lässt.

Eine beidseitige Profilierung der Bandoberfläche lässt sich beispielsweise erreichen, indem jede Flachseite des Bandes mittels einer Prägewalze profiliert wird. Dabei wird das Metallband zwischen zwei Prägewalzen hindurchgeführt.

Erfindungsgemäß ist eine Flachseite derart mit Einprägungen versehen, dass sich jeweils keine Ausprägung auf der gegenüberliegenden Flachseite ergibt.

Das Metallband besteht bevorzugt aus Stahl, insbesondere aus Edelstahl, oder aus Aluminium. Dieses Material hat sich für die genannten Einsatzzwecke als vorteilhaft erwiesen.

Ebenfalls als vorteilhaft für die genannten Einsatzzwecke hat sich eine Materialstärke des Metallbandes zwischen 0,25 mm und 1 mm herausgestellt. Besonders bevorzugt ist ein Bereich für die Materialstärke von 0,4 mm bis 0,8 mm.

Die Erfindung betrifft auch einen Zier-, Dicht- oder Kantenschutzstreifen mit einem Metallband der vorstehend beschriebenen Art, wobei ein das Band zumindest bereichsweise umgebendes Dichtmaterial zumindest im Bereich der Profilierung mit der Oberfläche des Bandes innig verbunden aufgebracht ist.

Das Metallband der vorstehend beschriebenen Art dient bevorzugt zur Verwendung als Einlage in einem Zier-, Dicht- oder Kantenschutzstreifen.

Die Erfindung ist auch auf ein Verfahren zur Herstellung eines Metallbandes der vorstehend beschriebenen Art gerichtet. Das Verfahren umfasst die folgenden Schritte:
- Bereitstellen eines bandartigen Metallblechs,
- Prägen der Oberfläche mindestens einer Flachseite des Metallblechs, um eine Vielzahl von Einprägungen zu erzeugen, die so ausgebildet sind, dass sich jeweils keine Ausprägung auf der gegenüberliegenden Flachseite ergibt, und
- bevorzugt Erzeugen von aufeinanderfolgenden Durchbrechungen, insbesondere mittels Stanzen und/oder Schneiden des Metallblechs,
- gegebenenfalls bevorzugt Längen des Metallblechs, um durch Dehnung des Metallblechs die Öffnungsweite zumindest eines Teils der Durchbrechungen zu vergrößern.

Das Profilieren der Oberfläche der Flachseite kann sowohl vor als auch nach dem Erzeugen der Durchbrechungen erfolgen. Eine besonders gute Profilierung wird jedoch erreicht, wenn die Profilierung der Bandoberfläche nach dem Erzeugen der Durchbrechungen erfolgt, da dann die Gestalt und die Prägetiefe durch die Erzeugung der Durchbrechungen, insbesondere durch das Längen des Metallblechs, nicht beeinflusst wird.

Wie bereits erwähnt kann die Oberfläche der Flachseite in einem Rollprägeverfahren mittels mindestens einer Prägewalze profiliert werden. Zu diesem Zweck kann eine Mantelfläche der Prägewalze eine zu der Form der zu prägenden Einprägungen komplementär ausgestaltete Form aufweisen.

Ausführungsbeispiele der Erfindung sind in der Zeichnung dargestellt und werden nachfolgend beschrieben. Es zeigen, jeweils in schematischer Darstellung,
- Fig. 1: eine Draufsicht auf eine Schmalseite eines erfindungsgemäßen Metallbandes,
- Fig. 2: eine Draufsicht auf eine Flachseite des Metallbandes von Fig. 1,
- Fig. 3: eine Draufsicht auf eine Flachseite einer anderen Variante des erfindungsgemäßen Metallbandes,
- Fig. 4: eine Draufsicht auf eine Flachseite noch einer Variante eines erfindungsgemäßen Metallbandes,
- Fig. 5: eine Draufsicht auf eine Flachseite einer weiteren Variante des erfindungsgemäßen Metallbandes, und
- Fig. 6: noch eine Draufsicht auf eine Flachseite eines erfindungsgemäßen Metallbandes.

In den Zeichnungen zeigen die Figuren Ansichten verschiedener Metallbänder, welche als Einlage in einem Zier-, Dicht- oder Kantenschutzstreifen Verwendung finden.

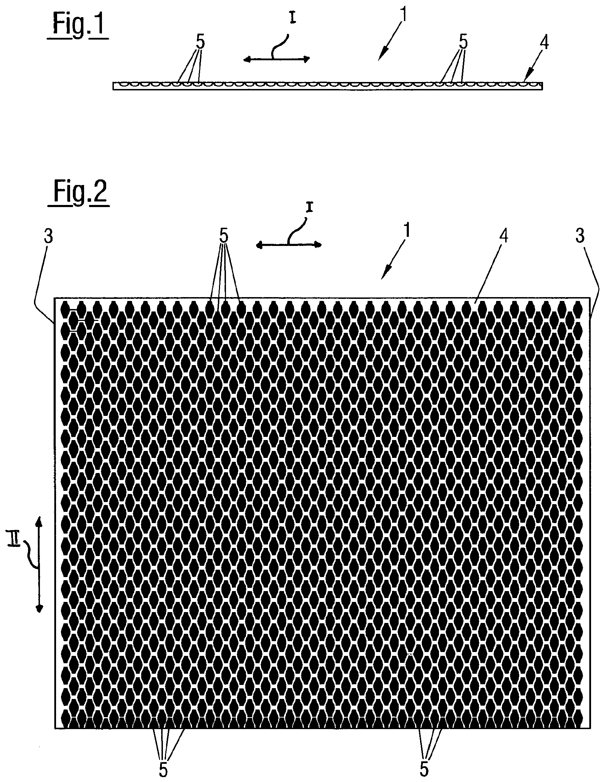

Das in den Fig. 1 und 2 dargestellte Metallband 1 weist keine Schlitze oder Durchbrechungen auf. Wie man insbesondere in Fig. 2 erkennt, ist die Oberfläche der dargestellten Flachseite 4 des Metallbandes 1 jedoch profiliert ausgebildet. Insbesondere ist die Flachseite 4 mit einer Vielzahl von Einprägungen 5 versehen, die über die gesamte Oberfläche dieser Flachseite 4 gleichmäßig verteilt angeordnet sind. Dabei ist die Flachseite 4 derart mit Einprägungen 5 versehen, dass sich jeweils keine Ausprägung auf der gegenüberliegenden Flachseite 4 ergibt.

Überdies ist es auch möglich, dass beide Flachseiten 4 des Bandes 1 Einprägungen aufweisen.

Durch die Einprägungen 5 wird auf der entsprechend profilierten Flachseite 4 des Bandes 1 eine Profilierung in Form eines oberflächenvergrößerndes Rastermusters aus einer Vielzahl von Einprägungen 5 gebildet.

Damit ein Dichtmaterial, wie zum Beispiel ein Gummi- oder ein flexibles Kunststoffmaterial, besonders gut an dem Metallband 1 anhaften kann, sind möglichst viele einzelne Einprägungen 5 dicht nebeneinander angeordnet. Die Profilierung kann dabei eine Dichte von bis zu 700, vorzugsweise bis zu 800 und besonders bevorzugt von bis zu 850 Einprägungen 5 auf einer Fläche von einem Quadratzentimeter aufweisen. In dem dargestellten Ausführungsbeispiel sind 833 Einprägungen pro Quadratzentimeter vorgesehen.

Zwischen der Oberfläche der Flachseite 4 und einem Boden einer Einprägung 5 kann die Einprägung 5 eine Prägetiefe von 0,01 mm bis 0,7 mm aufweisen.

Wie anhand von Fig. 2 bis 6 zu erkennen ist, weisen die Einprägungen 5 eine Längserstreckung auf. Die Längserstreckung der Einprägungen 5 ist unter einem Winkel von zumindest annähernd 90° bezüglich der Längsrichtung I des Bandes 1 ausgerichtet, oder anders ausgedrückt ist die Längserstreckung der Einprägungen 5 zumindest annähernd parallel zur Querrichtung II des Bandes 1 ausgerichtet. Die Einprägungen 5 können aber auch mit ihrer jeweiligen Längserstreckung unter einem von 90° abweichenden anderen Winkel zur Längsrichtung I des Bandes 1 ausgerichtet sein.

Wie ebenfalls anhand von Fig. 2 bis 6 zu erkennen ist, sind mehrere Einprägungen 5 in aufeinanderfolgenden Reihen und Spalten angeordnet, wobei sich die Reihen in Längsrichtung I des Bandes 1 und die Spalten in Querrichtung II des Bandes 1 erstrecken. Die mehreren Einprägungen 5 sind jeweils in Längsrichtung I des Bandes 1 hintereinander in einer Spalte angeordnet, wobei die Spalten der Einprägungen 5 entsprechend der Längserstreckung der Einprägungen 5 quer zur Längsrichtung I des Bandes 1 ausgerichtet sind. Mit anderen Worten sind die Spalten von hintereinander angeordneten Einprägungen 5 zumindest annähernd parallel zur Querrichtung II des Bandes 1 ausgerichtet. Ferner ist anhand von Fig. 2 bis 6 zu erkennen, dass die Einprägungen 5 von in Längsrichtung I des Bandes 1 aufeinanderfolgenden Spalten von Einprägungen 5 in Querrichtung II zueinander versetzt sind. Genauer gesagt sind die Einprägungen 5 von in Längsrichtung des Bandes aufeinanderfolgenden Spalten von Einprägungen 5 um die halbe Längserstreckung einer Einprägung 5 zueinander versetzt. Die Einprägungen 5 bilden dabei ein sich sowohl in Längsrichtung I als auch in Querrichtung II des Metallbandes 1 wiederholendes Muster.

Für eine besonders dichte Anordnung der Einprägungen 5 kann der Abstand zwischen den Mittelpunkten einer Einprägung 5 und einer unmittelbar benachbarten Einprägung 5 in Querrichtung II des Bandes 1 geringer als 1,0 mm und vorzugsweise geringer als 0,7 mm sein. In den Ausführungsbeispielen ist der Abstand zwischen zwei Einprägungen 5 in Querrichtung II des Bandes 1 geringer als 0,4 mm.

Zusätzlich oder alternativ kann der Abstand zwischen den Mittelpunkten einer Einprägung 5 und einer unmittelbar benachbarten Einprägung 5 in Längsrichtung I des Bandes 1 gesehen geringer als 0,7 mm und vorzugsweise geringer als 0,5 mm sein. In den Ausführungsbeispielen ist der Abstand zwischen zwei benachbarten Einprägungen 5 in Längsrichtung I des Bandes 1 gesehen geringer als 0,3 mm. Da die Spalten von Einprägungen 5 in Längsrichtungen aufeinanderfolgen, ist folglich der Abstand zwischen zwei Spalten von Einprägungen 5 ebenfalls geringer als 0,3 mm.

Die zweite Flachseite des Metallbandes 1 kann in entsprechender Weise profiliert oder glatt ausgebildet sein. Dadurch ergibt sich auch ohne Haftmittelbeschichtung und ohne Durchbrechungen eine gute Haftung zwischen Metallband und Kunststoffummantelung.

Die Einprägungen 5 können auch keine Längserstreckung aufweisen, sondern können quasi punktförmig ausgestaltet sein. Die Einprägungen 5 können dabei die Form einer drei- oder vierseitigen Pyramide oder Pyramidenstumpfes, eines Kegels oder Kegelstumpfes, einer Kuppel, eines Zylinders, eines Walmdachs, einer Linse, Querrillen oder Längsrillen sowie eine Freiform oder Kombinationen hieraus aufweisen. Das Metallband besteht bevorzugt aus Edelstahl oder Aluminium und hat eine Materialstärke zwischen 0,25 mm und 1 mm. Bevorzugt beträgt die Materialstärke 0,4 bis 0,8 mm.

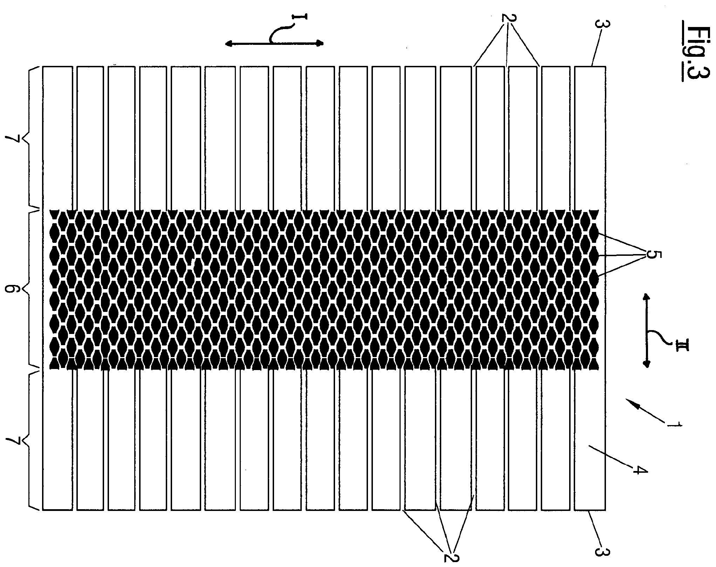

Das Ausführungsbeispiel von Fig. 3 stimmt im Prinzip mit dem Ausführungsbeispiel der Fig. 1 und 2 überein. Im Unterschied zum Ausführungsbeispiel der Fig. 1 und 2 sind die Einprägungen 5 hier jedoch nur in einem mittleren Bereich 6 über die Querrichtung II des Metallbandes 1 betrachtet vorhanden. In diesem mittleren Bereich 6 weist das Metallband 1 keine Durchbrechungen auf. Die beidseits vom mittleren Bereich 6 gelegenen Randbereiche 7 sind dagegen mit Schlitzen 2 versehen, die von einem Rand 3 des Metallbandes 1 nach innen geführt sind. Das Band 1 weist dabei eine Vielzahl von in Längsrichtung I des Bandes 1 aufeinanderfolgenden schlitzartigen Durchbrechungen 2 auf. In diesen beiden Randbereichen 7 sind, wie gesagt, keine Einprägungen 5 vorhanden, die Oberfläche des Metallbandes 1 ist in diesen Bereichen also nicht profiliert.

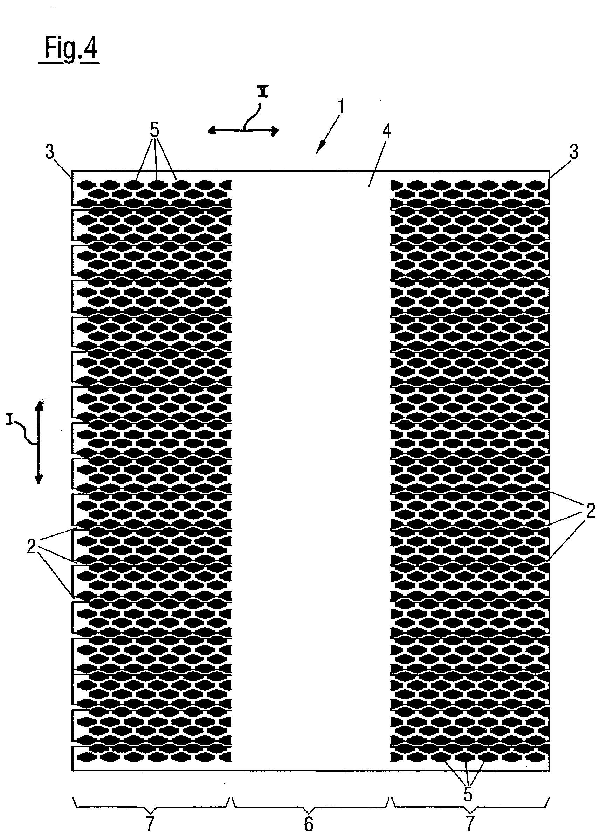

Das Ausführungsbeispiel von Fig. 4 stimmt wiederum weitgehend mit dem Ausführungsbeispiel von Fig. 3 überein. Im Unterschied zum Ausführungsbeispiel von Fig. 3 sind hier jedoch die Einprägungen 5 ausschließlich in den beiden Randbereichen 7 vorgesehen, während im mittleren Bereich 6 keine Profilierung der Oberfläche des Metallbandes 1 vorhanden ist.

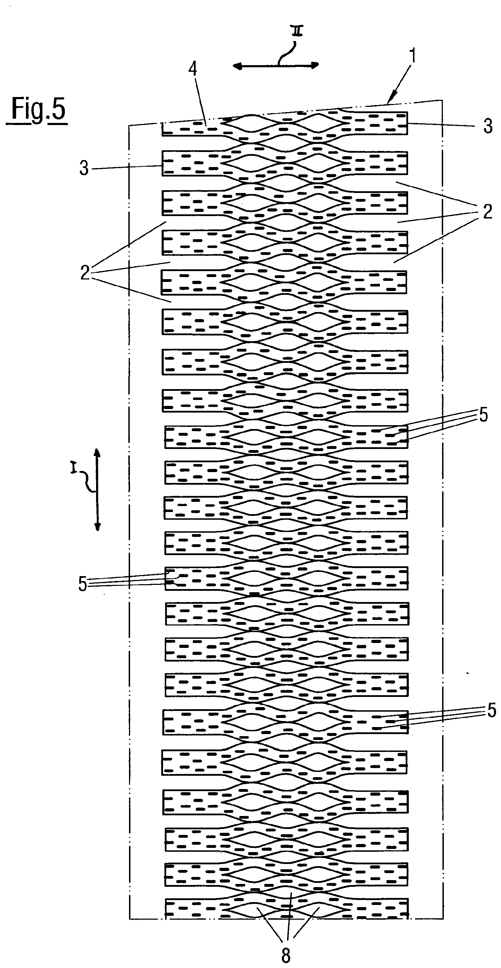

Bei dem Metallband des Ausführungsbeispiels von Fig. 5 sind neben den Durchbrechungen 2, die als von den beiden Rändern 3 nach innen geführte Schlitze ausgeführt sind, noch Inseldurchbrechungen 8 im mittleren Bereich 6 des Metallbandes vorhanden. Die Inseldurchbrechungen 8 sind wie die Randschlitze 2 in Längsrichtung I des Bandes aufeinanderfolgend vorgesehen, wobei drei Spuren von Inseldurchbrüchen 8 vorhanden sind, die sich gegenseitig überlappen. Die gesamte Oberfläche der dargestellten Flachseite 4 des Metallbandes 1 ist profiliert ausgebildet, indem in dieser Flachseite 4 Einprägungen 5 eingebracht sind. Die gegenüberliegende Flachseite des Metallbandes kann ebenfalls mit solchen oder anderen Einprägungen als Profilierung versehen sein.

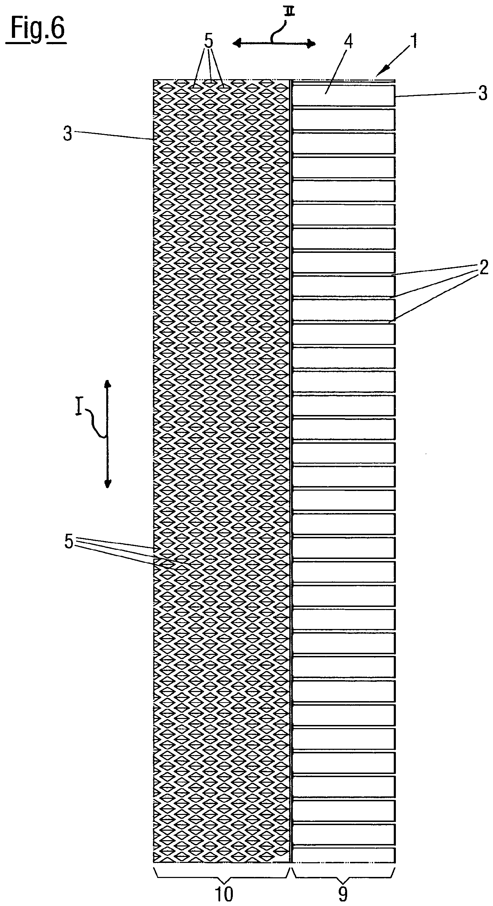

Fig. 6 zeigt eine Ausgestaltung des erfindungsgemäßen Metallbandes 1 mit einer asymmetrischen Ausgestaltung. Durchbrechungen 2 sind nur in einem Bereich 9 vorgesehen, der von einem Rand 3 des Metallbandes bis nahe zu dessen Mitte erstreckt ist. In dem verbleibenden Bereich 10 des Metallbandes, der sich vom anderen Rand 3 des Metallbandes bis zum ersten Bereich 9 erstreckt, sind keine Durchbrechungen vorhanden. Andererseits ist der zweite Bereich 10 mit einer profilierten Oberfläche versehen, indem in der dargestellten Flachseite 4 Einprägungen 5 vorhanden sind, während in dem ersten Bereich 9 keine Profilierung vorgesehen ist. Die Profilierung ist auch hier als sich wiederholendes Muster ausgebildet und kann auch auf der gegenüberliegenden Flachseite des Metallbandes in dieser oder anderer Form vorhanden sein.

Alle dargestellten Metallbänder bestehen bevorzugt aus Stahl, insbesondere aus Edelstahl, oder Aluminium und weisen eine Materialstärke von bevorzugt zwischen 0,25 mm und 1 mm, insbesondere zwischen 0,4 mm und 0,8 mm auf. Die Einprägungen 5 der dargestellten Metallbänder können jeweils die Form aufweisen, die zu dem Ausführungsbeispiel von Fig. 1 beschrieben wurde. Anders als dargestellt können die Einprägungen 5 auch nicht einem Muster folgen, sondern zufällig verteilt über die Oberfläche der jeweiligen Flachseite 4 angeordnet sein. Ebenso kann die Verteilung der Profilierung auf verschiedene Bereiche des Metallbandes 1 anders gewählt sein.

Das erfindungsgemäße Metallband zeichnet sich durch gute Hafteigenschaften mit Kunststoff oder Gummi aus. Es kann daher ohne Oberflächenbeschichtung für Zier-, Dicht- oder Kantenschutzstreifen verwendet werden, insbesondere für Kraftfahrzeuge. Die dargestellten Metallbänder werden bevorzugt zu einem U-Profil gebogen und bilden jeweils ein Klemmprofil.

Nachfolgend wird ein Verfahren zur Herstellung eines Metallbandes erläutert. Das Verfahren beginnt mit dem Bereitstellen eines bandartigen Metallblechs. Anschließend werden in dem Metallband aufeinanderfolgende Durchbrechungen 2, 8, beispielsweise durch Stanzen und/oder Schneiden des Metallblechs, erzeugt. Das Metallblech kann gegebenenfalls auseinandergezogen werden, um durch Dehnung des Metallblechs die Öffnungsweite mindestens eines Teils der Durchbrechungen 2, 8 zu vergrößern. Im darauffolgenden Schritt wird die Oberfläche der Flachseite 4 bzw. werden beide Oberflächen der Flachseite 4 profiliert, nämlich geprägt, um eine Vielzahl von Einprägungen 5 zu erzeugen. Alternativ kann die Profilierung der Oberfläche der Flachseite 4 bzw. der Oberflächen der Flachseiten 4 auch vor dem Erzeugen der Durchbrechungen 2, 8 erfolgen.

Die Profilierung der Oberfläche der oder jeder Flachseite 4 erfolgt dabei in einem Rollprägeverfahren mittels mindestens einer Prägewalze. Die Prägewalze weist hierzu eine Mantelfläche auf, die eine zu der Form der zu prägenden Einprägungen 5 komplementär ausgestaltete Form aufweist.

Anschließend wird das Metallband mittels eines Dichtmaterials, wie z.B. ein Gummi- oder flexibles Kunststoffmaterial, zumindest bereichsweise umgeben, um einen Zier-, Dicht- oder Kantenschutzstreifen mit darin eingelegtem Metallband zu bilden, bei welchem das Dichtmaterial das Band 1 zumindest bereichsweise umgibt und bei welchem das Dichtmaterial im Bereich der Profilierung mit der Oberfläche des Bandes innig verbunden aufgebracht ist.

### Bezugszeichenliste

- 1: Metallband
- 2: Durchbrechung
- 3: Rand von 1
- 4: Flachseite von 1
- 5: Einprägung
- 6: mittlerer Abschnitt
- 7: Randabschnitt
- 8: Inseldurchbruch
- 9: erster Abschnitt
- 10: zweiter Abschnitt
- I: Längsrichtung von 1
- II: Querrichtung von 1

## Patentansprüche

1. Metallband als Einlage für Zier-, Dicht- oder Kantenschutzstreifen, insbesondere Kraftfahrzeuge, wobei die Oberfläche auf mindestens einer Flachseite (4) des Bandes (1) profiliert ausgebildet ist,
**dadurch gekennzeichnet, dass**
die Profilierung der Oberfläche auf mindestens einer Flachseite (4) des Bandes (1) durch ein oberflächenvergrößerndes Rastermuster aus einer Vielzahl von Einprägungen (5) gebildet ist, die so ausgebildet sind, dass sich jeweils keine Ausprägung auf der gegenüberliegenden Flachseite (4) ergibt.

2. Metallband nach Anspruch 1,
**dadurch gekennzeichnet, dass**
das Band (1) eine Vielzahl von in Längsrichtung (I) des Bandes (1) aufeinanderfolgenden, insbesondere schlitzartigen, Durchbrechungen (2, 8) aufweist.

3. Metallband nach einem der vorhergehenden Ansprüche,
**dadurch gekennzeichnet, dass**
die Oberfläche der Flachseite (4) nur bereichsweise, insbesondere in einem oder mehreren Längsstreifen (6, 7, 10) mit der Profilierung versehen ist.

4. Metallband nach Anspruch 2,
**dadurch gekennzeichnet, dass**
die Profilierung nur in Bereichen (7) mit Durchbrechungen (2) vorgesehen ist, oder dass die Profilierung nur in Bereichen (6, 10) ohne Durchbrechungen (2) vorgesehen ist.

5. Metallband nach einem der vorhergehenden Ansprüche 1 bis 3,
**dadurch gekennzeichnet, dass**
die gesamte Oberfläche der Flachseite (4) profiliert ausgebildet ist.

6. Metallband nach einem der vorhergehenden Ansprüche,
**dadurch gekennzeichnet, dass**
die Profilierung (5) ein sich in Längsrichtung (I) und/oder Querrichtung (II) des Bandes (1) wiederholendes Muster aufweist, und/oder
dass die Profilierung eine Dichte von bis zu 700, vorzugsweise bis zu 800 und besonders bevorzugt von bis zu 850 Einprägungen (5) auf einer Fläche von einem Quadratzentimeter aufweist.

7. Metallband nach einem der vorhergehenden Ansprüche,
**dadurch gekennzeichnet, dass**
die Einprägungen (5) eine Prägetiefe von 0,01 mm bis 0,7 mm aufweisen, und/oder
dass die Einprägungen (5) eine Längserstreckung aufweisen, wobei die Längserstreckung der Einprägungen (5) unter einem Winkel von 0° bis 90° zur Längsrichtung (I) des Bandes (1) ausgerichtet ist,
oder
dass die Einprägungen (5) quasi punktförmig ausgestaltet sind, insbesondere wobei die Einprägungen (5) die Form einer drei- oder vierseitigen Pyramide oder Pyramidenstumpfes, Kegels oder Kegelstumpfes, einer Kuppel, eines Zylinders, eines Walmdachs, einer Linse oder eine Freiform aufweisen.

8. Metallband nach einem der vorhergehenden Ansprüche,
**dadurch gekennzeichnet, dass**
mehrere Einprägungen (5) in aufeinanderfolgenden Reihen und Spalten angeordnet sind, insbesondere wobei sich die Reihen in Längsrichtung (I) des Bandes (1) und die Spalten in Querrichtung (II) des Bandes (1) erstrecken, wobei besonders bevorzugt die Einprägungen (5) von in Längsrichtung (I) des Bandes (1) aufeinanderfolgenden Spalten von Einprägungen (5) in Querrichtung (II) zueinander versetzt sind, insbesondere um die halbe Längserstreckung einer Einprägung (5).

9. Metallband nach einem der Ansprüche 2 bis 8,
**dadurch gekennzeichnet, dass**
der Abstand zwischen den Mittelpunkten einer Einprägung (5) und einer unmittelbar benachbarten Einprägung (5) in Querrichtung (I) des Bandes (1) gesehen geringer als 1,0 mm, vorzugsweise geringer als 0,7 mm und besonders bevorzugt geringer als 0,4 mm ist,
und/oder
der Abstand zwischen den Mittelpunkten einer Einprägung (5) und einer unmittelbar benachbarten Einprägung (5) in Längsrichtung (I) des Bandes (1) gesehen geringer als 0,7 mm, vorzugsweise geringer als 0,5 mm und besonders bevorzugt geringer als 0,3 mm ist.

10. Metallband nach einem der vorstehenden Ansprüche,
**dadurch gekennzeichnet, dass**
beide Flachseiten (4) des Bandes (1) Einprägungen (5) aufweisen.

11. Metallband nach einem der vorhergehenden Ansprüche,
**dadurch gekennzeichnet, dass**
das Metallband (1) aus Stahl, insbesondere Edelstahl, oder Aluminium besteht, und/oder dass das Metallband (1) eine Materialstärke von 0,25 mm bis 1 mm, insbesondere 0,4 mm bis 0,8 mm aufweist.

12. Zier-, Dicht- oder Kantenschutzstreifen mit einem Metallband nach zumindest einem der Ansprüche 1 bis 11, wobei ein das Band (1) zumindest bereichsweise umgebendes Dichtmaterial zumindest im Bereich der Profilierung mit der Oberfläche des Bandes innig verbunden aufgebracht ist.

13. Verwendung eines Metallbandes, nach zumindest einem der Ansprüche 1 bis 11, als Einlage in einem Zier-, Dicht- oder Kantenschutzstreifen.

14. Verfahren zur Herstellung eines Metallbandes nach zumindest einem der Ansprüche 1 bis 11, wobei das Verfahren die folgenden Schritte umfasst:
- Bereitstellen eines bandartigen Metallblechs,
- Prägen der Oberfläche mindestens einer Flachseite (4) des Metallblechs, um eine Vielzahl von Einprägungen (5) zu erzeugen, die so ausgebildet sind, dass sich jeweils keine Ausprägung auf der gegenüberliegenden Flachseite (4) ergibt, und
- bevorzugt Erzeugen von aufeinanderfolgenden Durchbrechungen (2, 8), insbesondere mittels Stanzen und/oder Schneiden des Metallblechs,
- gegebenenfalls bevorzugt Längen des Metallblechs, um durch Dehnung des Metallblechs die Öffnungsweite zumindest eines Teils der Durchbrechungen (2, 8) zu vergrößern.

15. Verfahren nach Anspruch 14,
**dadurch gekennzeichnet, dass**
das Profilieren der Oberfläche der Flachseite (4) vor oder nach dem Erzeugen der Durchbrechungen (2, 8) erfolgt und/oder
dass die Oberfläche der Flachseite (4) in einem Rollprägeverfahren mittels mindestens einer Prägewalze profiliert wird, insbesondere wobei eine Mantelfläche der Prägewalze eine zu der Form der zu prägenden Einprägungen (5) komplementär ausgestaltete Form aufweist.

## Claims

1. A metal band as an insert for trim strips, sealing strips, or edge protection strips, in particular for motor vehicles, wherein the surface is profiled at at least one flat side (4) of the band (1),
**characterized in that**
the profiling of the surface at at least one flat side (4) of the band (1) is formed by a surface-enlarging grid pattern of a plurality of impressions (5) which are formed such that in each case no stamped portion results at the oppositely disposed flat side (4).

2. A metal band according to claim 1,
**characterized in that**
the band (1) has a plurality of openings (2, 8) following one another in the longitudinal direction (I) of the band (1), in particular slot-like openings (2, 8).

3. A metal band according to one of the preceding claims,
**characterized in that**
the surface of the flat side (4) is only regionally provided with the profiling, in particular in one or more longitudinal strips (6, 7, 10).

4. A metal band according to claim 2,
**characterized in that**
the profiling is only provided in regions (6, 10) with openings (2), or **in that** the profiling is only provided in regions (6, 10) without openings (2).

5. A metal band according to any one of the preceding claims 1 to 3,
**characterized in that**
the total surface of the flat side (4) is profiled.

6. A metal band according to any one of the preceding claims,
**characterized in that**
the profiling (5) has a pattern which repeats in the longitudinal direction (I) and/or the transverse direction (II) of the band (1), and/or
**in that** the profiling has a density of up to 700 impressions (5), preferably up to 800 impressions (5), and particularly preferably of up to 850 impressions (5), on an area of one square centimeter.

7. A metal band according to any one of the preceding claims,
**characterized in that**
the impressions (5) have an embossing depth of 0.01 mm to 0.7 mm, and/or
**in that** the impressions (5) have a longitudinal extent, with the longitudinal extent of the impressions (5) being oriented at an angle of 0° to 90° to the longitudinal direction (I) of the band (1),
or
**in that** the impressions (5) are so-to-say designed point-shaped, in particular wherein the impressions (5) have the shape of a three-sided or four-sided pyramid or truncated pyramid, a cone or truncated cone, a dome, a cylinder, a hipped roof, a lens, or a free-form shape.

8. A metal band according to any one of the preceding claims,
**characterized in that**
a plurality of impressions (5) are arranged in consecutive rows and columns, in particular with the rows extending in the longitudinal direction (I) of the band (1) and the columns extending in the transverse direction (II) of the band (1), with particular preferably the impressions (5) of columns of impressions (5) following one another in the longitudinal direction (I) of the band (1) being offset from one another in the transverse direction (II), in particular by half the longitudinal extent of an impression (5).

9. A metal band according to any one of the claims 2 to 8,
**characterized in that**
the spacing between the centers of an impression (5) and a directly adjacent impression (5), viewed in the transverse direction (I) of the band (1), is less than 1.0 mm, preferably less than 0.7 mm and particularly preferably less than 0.4 mm,
and/or
the spacing between the centers of an impression (5) and a directly adjacent impression (5), viewed in the longitudinal direction (L) of the band (1), is less than 0.7 mm, preferably less than 0.5 mm, and particularly preferably less than 0.3 mm.

10. A metal band according to any one of the preceding claims,
**characterized in that**
both flat sides (4) of the band (1) have impressions (5).

11. A metal band according to any one of the preceding claims,
**characterized in that**
the metal band (1) consists of steel, in particular stainless steel, or aluminum, and/or **in that** the metal band (1) has a material thickness of 0.25 mm to 1 mm, in particular 0.4 mm to 0.8 mm.

12. A trim strip, a sealing strip, or an edge protection strip comprising a metal band according to at least one of the claims 1 to 11, wherein a sealing material at least regionally surrounding the band (1) is applied intimately connected to the surface of the band at least in the region of the profiling.

13. Use of a metal band, according to at least one of the claims 1 to 11, as an insert in a trim strip, a sealing strip, or an edge protection strip.

14. A method of manufacturing a metal band according to at least one of the clams 1 to 11, wherein the method comprises the following steps:
- providing a band-like metal sheet,
- embossing the surface of at least one flat side (4) of the metal sheet by a plurality of impressions (5) which are formed such that in each case no stamped portion results at the oppositely disposed flat side (4), and
- preferably producing consecutive openings (2, 8), in particular by means of punching and/or cutting the metal sheet,
- if necessary, preferably elongating the metal sheet to increase the opening width of at least some of the openings (2, 8) by stretching the metal sheet.

15. A method according to claim 14,
**characterized in that**
the profiling of the surface of the flat side (4) takes place before or after the production of the openings (2, 8), and/or
**in that** the surface of the flat side (4) is profiled in a rolling embossing process by means of at least one embossing roller, in particular with a jacket surface of the embossing roller having a shape which is designed complementary to the shape of the impressions (5) to be embossed.

## Revendications

1. Ruban métallique à titre d'insert pour des bandes d'enjolivement, d'étanchéité ou de protection des bords, en particulier pour des véhicules automobiles, la surface étant profilée sur au moins une face plate (4) du ruban,
**caractérisé en ce que**
le profilage de la surface sur au moins une face plate (4) du ruban (1) est formé par un motif de trame agrandissant la surface et constitué d'une pluralité d'empreintes (5) qui sont réalisées de telle sorte qu'il n'en résulte pas de bosse respective sur la face plate opposée (4).

2. Ruban métallique selon la revendication 1,
**caractérisé en ce que**
le ruban (1) présente une pluralité d'ajours (2, 8), en particulier en forme de fentes, qui se succèdent dans la direction longitudinale (I) du ruban (1).

3. Ruban métallique selon l'une des revendications précédentes,
**caractérisé en ce que**
la surface de la face plate (4) n'est pourvue du profilage que localement, en particulier dans une ou plusieurs lames longitudinales (6, 7, 10).

4. Ruban métallique selon la revendication 2,
**caractérisé en ce que**
le profilage n'est prévu que dans des zones (7) avec des ajours (2), ou **en ce que** le profilage n'est prévu que dans des zones (6, 10) sans ajours (2).

5. Ruban métallique selon l'une des revendications précédentes 1 à 3,
**caractérisé en ce que**
la totalité de la surface de la face plate (4) est profilée.

6. Ruban métallique selon l'une des revendications précédentes,
**caractérisé en ce que**
le profilage (5) présente un motif se répétant dans la direction longitudinale (I) et/ou dans la direction transversale (II) du ruban (1), et/ou
**en ce que** le profilage présente une densité allant jusqu'à 700, de préférence jusqu'à 800 et de manière particulièrement préférée jusqu'à 850 empreintes (5) sur une surface d'un centimètre carré.

7. Ruban métallique selon l'une des revendications précédentes,
**caractérisé en ce que**
les empreintes (5) présentent une profondeur d'estampage de 0,01 mm à 0,7 mm, et/ou
**en ce que** les empreintes (5) ont une extension longitudinale, l'extension longitudinale des empreintes (5) étant orientée selon un angle de 0° à 90° par rapport à la direction longitudinale (I) du ruban (1), ou
**en ce que** les empreintes (5) ont une forme quasi ponctuelle, en particulier, les empreintes (5) ayant la forme d'une pyramide ou d'une pyramide tronquée à trois ou quatre côtés, d'un cône ou d'un cône tronqué, d'une coupole, d'un cylindre, d'un toit en croupe, d'une lentille ou d'une forme libre.

8. Ruban métallique selon l'une des revendications précédentes,
**caractérisé en ce que**
plusieurs empreintes (5) sont disposées en rangées et en colonnes successives, en particulier, les rangées s'étendent dans la direction longitudinale (I) du ruban (1) et les colonnes s'étendent dans la direction transversale (II) du ruban (1), de manière particulièrement préférée, les empreintes (5) de colonnes d'empreintes (5) se succédant dans la direction longitudinale (I) du ruban (1) sont décalées les unes par rapport aux autres dans la direction transversale (II), en particulier de la moitié de l'extension longitudinale d'une empreinte (5).

9. Ruban métallique selon l'une des revendications 2 à 8,
**caractérisé en ce que**
la distance entre les centres d'une empreinte (5) et d'une empreinte (5) immédiatement voisine, vue dans la direction transversale (II) du ruban (1), est inférieure à 1,0 mm, de préférence inférieure à 0,7 mm et de manière particulièrement préférée inférieure à 0,4 mm,
et/ou
la distance entre les centres d'une empreinte (5) et d'une empreinte (5) immédiatement voisine, vue dans la direction longitudinale (I) du ruban (1), est inférieure à 0,7 mm, de préférence inférieure à 0,5 mm et de manière particulièrement préférée inférieure à 0,3 mm.

10. Ruban métallique selon l'une des revendications précédentes,
**caractérisé en ce que**
les deux faces plates (4) du ruban (1) présentent des empreintes (5).

11. Ruban métallique selon l'une des revendications précédentes,
**caractérisé en ce que**
le ruban métallique (1) est en acier, en particulier en acier inoxydable, ou en aluminium, et/ou
**en ce que** le ruban métallique (1) présente une épaisseur de matériau de 0,25 mm à 1 mm, en particulier de 0,4 mm à 0,8 mm.

12. Bande d'enjolivement, d'étanchéité ou de protection des bords comprenant un ruban métallique selon l'une au moins des revendications 1 à 11, dans laquelle un matériau d'étanchéité entourant le ruban (1) au moins localement est appliqué en liaison intime avec la surface du ruban au moins dans la zone du profilage.

13. Utilisation d'un ruban métallique selon l'une au moins des revendications 1 à 11 à titre d'insert dans une bande d'enjolivement, d'étanchéité ou de protection des bords.

14. Procédé de fabrication d'un ruban métallique selon l'une au moins des revendications 1 à 11, ledit procédé comprenant les étapes suivantes consistant à :
- fournir une tôle métallique de type ruban,
- estamper la surface d'au moins une face plate (4) de la tôle métallique, en particulier pour produire une pluralité d'empreintes (5) qui sont réalisées de telle sorte qu'il n'en résulte pas de bosse respective sur la face plate opposée (4), et
- de préférence, produire des ajours successifs (2, 8), en particulier par poinçonnage et/ou par découpe de la tôle métallique,
- le cas échéant, de préférence, allonger la tôle métallique afin d'augmenter la largeur d'ouverture d'au moins une partie des ajours (2, 8) par allongement de la tôle métallique.

15. Procédé selon la revendication 14,
**caractérisé en ce que**
le profilage de la surface de la face plate (4) s'effectue avant ou après la production des ajours (2, 8), et/ou
**en ce que** la surface de la face plate (4) est profilée dans un procédé d'estampage au rouleau au moyen d'au moins un cylindre d'estampage, en particulier une surface enveloppe du cylindre d'estampage présentant une forme conçue de manière complémentaire à la forme des empreintes (5) à estamper.
